# EUROPEAN PATENT APPLICATION

(11) **EP 2 385 344 A2**
(43) Date of publication of application: **09.11.2011**
(21) Application number: 11164374.8
(22) Date of filing: 29.04.2011
(51) Int. Cl.: G01C 19/66

(54) **Systems and methods for improved ring laser gyroscope devices through mix ratio optimization**

(30) Priority: 05.05.2010 US 774074
(71) Applicant: Honeywell International, Inc., Morristown, New Jersey 07962-2245 (US)
(72) Inventor: Schober, Christina M., Morristown, NJ 07962-2245 (US); Callaghan, Timothy J., Morristown, NJ 07962-2245 (US); Sittler, Daniel L., Morristown, NJ 07962-2245 (US); Thelman, Leroy O., Morristown, NJ 07962-2245 (US)
(74) Representative: Buckley, Guy Julian

(57) **Abstract**

Systems and methods for improved ring laser gyroscope devices through mix ratio optimization are provided. In one embodiment, a ring laser gyroscope device comprises: a laser block assembly having a cavity therein that defines a ring shaped laser beam path around the laser block assembly, the cavity containing a fill gas mixture comprising Helium and Neon, wherein the laser block assembly is characterized as having a Neon depletion life limiter; and a readout assembly optically coupled to the laser block assembly. The readout assembly outputs a laser intensity monitor (LIM) voltage that represents optical energy within the cavity. The fill gas mixture has a Helium to Neon ratio richer in Neon than a ratio that would produce a peak LIM voltage from the readout assembly.

## Description

### BACKGROUND

Ring Laser Gyro ("RLG") devices are a measurement tool used to calculate the angular rotation around a specified axis. An RLG measures the angular rotation around a specified axis by splitting a polarized laser beam in opposite directions within an enclosed cavity and measuring frequency difference of the two beams. RLG design utilizes a mixture of helium and neon gas within the enclosed cavity. Excitement of the gas mixture generates the light for forming the polarized laser beam. However, loss of neon pressure within the cavity over time, either through leaks or consumption of the neon by the RLG's cathode, causes a degradation of laser intensity as measured by the RLG's readout assembly. RLGs that ultimately fail due to the depletion of neon are said to have neon depletion as their life limiter.

For the reasons stated above and for other reasons stated below which will become apparent to those skilled in the art upon reading and understanding the specification, there is a need in the art for improved systems and methods for extending the usable life of RLGs having neon depletion as their life limiter.

### SUMMARY

The Embodiments of the present invention provide methods and systems for improved ring laser gyroscope devices through mix ratio optimization and will be understood by reading and studying the following specification.

In one embodiment, a ring laser gyroscope device comprises: a laser block assembly having a cavity therein that defines a ring shaped laser beam path around the laser block assembly, the cavity containing a fill gas mixture comprising Helium and Neon, wherein the laser block assembly is characterized as having a Neon depletion life limiter; and a readout assembly optically coupled to the laser block assembly. The readout assembly outputs a laser intensity monitor (LIM) voltage that represents optical energy within the cavity. The fill gas mixture has a Helium to Neon ratio richer in Neon than a ratio that would produce a peak LIM voltage from the readout assembly.

### DRAWINGS

Embodiments of the present invention can be more easily understood and further advantages and uses thereof more readily apparent, when considered in view of the description of the preferred embodiments and the following figures in which:

Figure 1 is a simplified block diagram of a laser block assembly for a ring laser gyroscope of one embodiment of the present invention;

Figure 2 is a graph illustrating LIM voltage verse fill gas mixture ratio for a LIM voltage test of one embodiment of the present invention; and

Figure 3 is a flow chart illustrating a method of one embodiment of the present invention.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

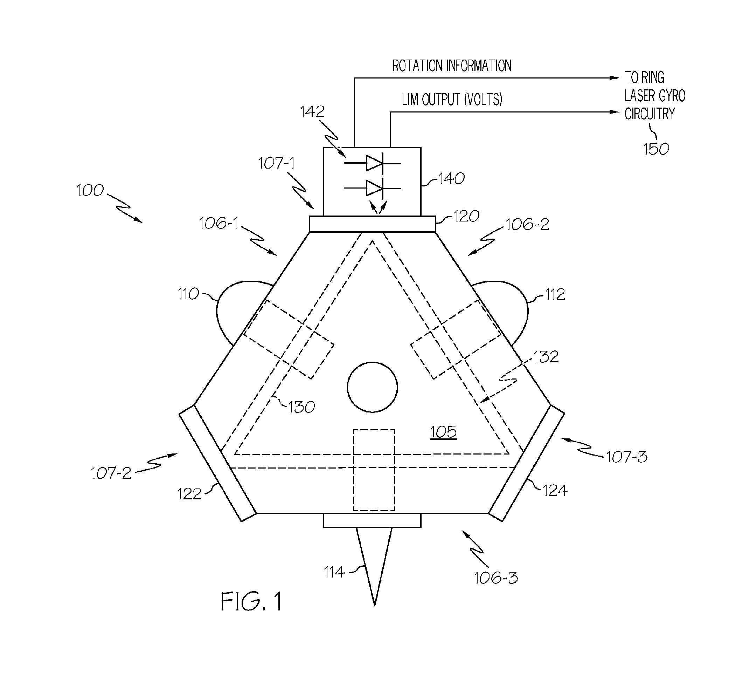

Figure 1 is a simplified block diagram of a laser block assembly 105 for a ring laser gyroscope (RLG) 100 of one embodiment of the present invention. Laser block assembly 105 is triangular in shape having three sides (106-1, 106-2 and 106-3) and three blunted corners 107-1, 107-2 and 107-3. Laser block assembly 105 includes two cathodes 110 and 112 and an anode 114 each positioned on the respective sides 106-1, 106-2 and 106-3 of the laser block assembly 105. In other embodiments, the laser block assembly may alternately include two anodes and a single cathode. Mirrors 120, 122 and 124 are located as shown at the blunted corners 107-1, 107-2 and 107-3 of laser block assembly 105, located between each of the sides 106-1, 106-2 and 106-3. Within laser block assembly is a cavity 130, which in conjunction with the mirrors 120, 122 and 124 forms a ring shaped laser beam path around the laser block assembly. The performance of RLG 100 is observed by coupling optical energy information from the cavity 130 to a readout assembly 140. The readout assembly, in one body that, includes a beam combining mechanism plus two photo diodes 142. The readout assembly provides to voltage signals from which the difference frequency and hence the rotation information may be obtained. In addition to the rotation information, the readout assembly, in this embodiment, also provides a voltage signal correlated with a laser intensity called the Laser Intensity Monitor (LIM). This LIM signal, referred to herein as the "LIM voltage" provides information regarding the optical energy within the cavity 130 of RLG 100. As would be appreciated by one of ordinary skill in the art upon reading this specification, there are a number of mechanisms for obtaining the LIM voltage. The particular mechanism used for obtaining the LIM voltage is not pertinent with respect to embodiments of the present invention, and any such mechanism may be used in conjunction with realizing readout assembly 140. Cavity 130 is filled with a fill gas mixture 132 of Helium and Neon and laser block assembly 105 is characterized as having neon depletion as its life limiter.

One of ordinary skill in the art after reading this specification would appreciate that Figure 1 illustrates a simplified block diagram that provides sufficient detail to facilitate an enabled written description of embodiments of the present invention. Additional details not shown regarding the physical structure and electronic circuitry associated with a laser block assembly for a ring laser gyroscope are considered within the knowledge and skill of one of ordinary skill in the art and are not discussed herein. In one embodiment Figure 1 represents a laser block assembly having the same physical structure of a Honeywell GG1308 sensor. In addition, one of ordinary skill in the art upon reading this specification can appreciate whether any particular laser block assembly they are using can be characterized as having neon depletion as its life limiter.

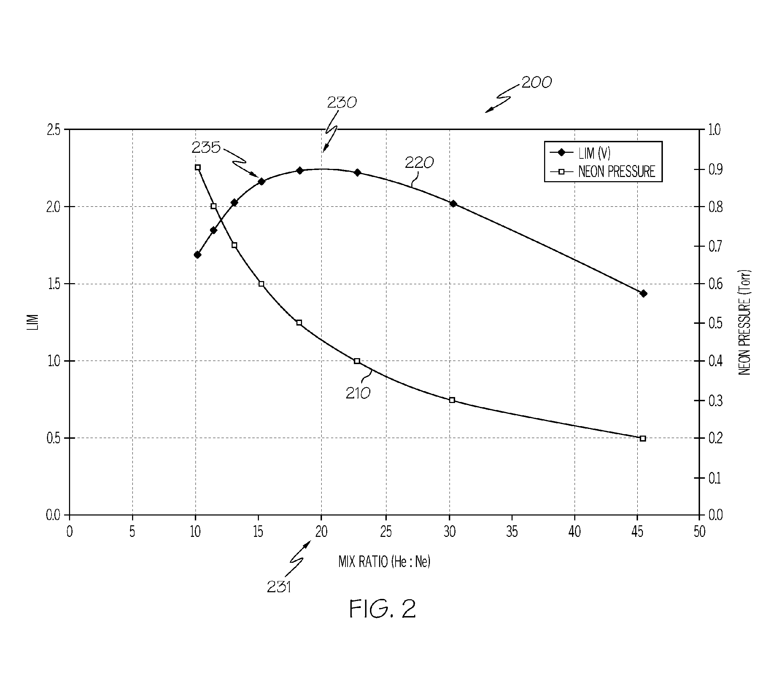

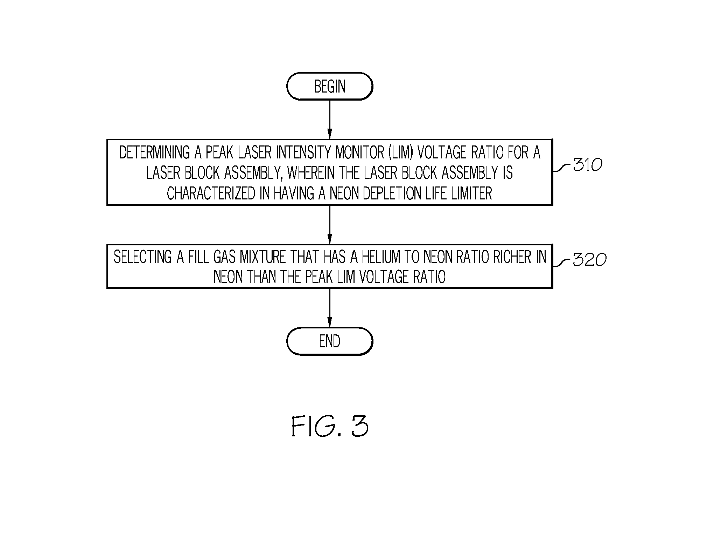

Embodiments of the present invention differ from the prior art in that the fill gas mixture 132 of Helium and Neon within cavity 130 is not optimized to initially provide a peak LIM voltage at the onset of the RLG 100's service life. Rather, cavity 130 is filled with a fill gas mixture 132 of Helium and Neon that will produce a sub-optimal LIM voltage on the onset of the RLG 100's designed service life by altering the gas mixture ratio as described below with respect to Figures 2 and 3. The present inventors have found that the gas mixtures provided by embodiments of the present invention have the benefits of providing extended life and reduced thermal sensitivity when compared to designs using gas mixtures that maximize the initial LIM voltage from the onset.

Embodiments of the present invention optimize fill gas mixture 132 to provide for a longer service life by giving up a certain level of LIM voltage margin at the early stages of RLG 100's life. Currently existing life constraints are overcome by understanding the physics of having neon depletion as a life limiter and compensating for it. This process is described below with reference to the graph shown generally at 200 in Figure 2 and the flow chart illustrated in Figure 3.

The process begins at 310 in Figure 3 with determining a peak LIM voltage ratio for a given laser block assembly under test. As discussed above, the laser block assembly under test is known to have a neon depletion life limiter. In one embodiment, determining a peak LIM voltage ratio is accomplished through a LIM voltage test such as illustrated in Figure 2. The purpose of the LIM voltage test is to test cavity fill gas mixtures of different Helium to Neon ratios, all under equivalent temperature conditions, to identify the Helium to Neon ratio that produces a peak LIM voltage. In Figure 2, the total pressure, that is, the partial pressure of Helium plus the partial pressure of Neon, is held constant while the mix ratio of Helium partial pressure to Neon partial pressure is varied to produce the data for each of the different mixture ratios. Figure 2 provides a plot at 210 of the Neon pressure within the cavity for each tested mixture ratio. Figure 2 also provides a plot at 220 of the resulting LIM voltage for each tested mixture ratio. Values for these curves between each data point may be interpolated or extrapolated using best curve fit algorithms known in the art. The gas mixture ratio associated with the peak LIM voltage (shown generally at 230) is referred to herein as the "peak LIM voltage ratio" (shown generally as 231). For the example test illustrated in Figure 2, the peak LIM voltage ratio occurs at a Helium to Neon ratio of 20:1. As would be appreciated by one of ordinary skill in the art upon reading this specification, the peak LIM voltage ratio for embodiments using other laser block assemblies may occur at ratios other than 20:1.

As revealed by Figure 2, selecting a fill gas mixture that has a Helium to Neon ratio richer in Neon than the peak LIM voltage ratio (such as shown at 235), will result in a relatively lower LIM voltage output from the readout assembly. As would be appreciated by one of ordinary skill in the art upon reading this specification, in collecting the data for Figure 2 testing is performed at a standard testing temperature. This curve of Figure 2 indicates that the sensitivity over the operating temperature range of the RLG at the gas mixture at 235 will be less than for the gas mixture at 230. Testing performed by the inventors has shown that at the mix ratio at 235 (versus the mix ratio at 230), the LIM voltage over the operating temperature range of the RLG remains more stable. Further, deviations over time as the device ages are less over the operating temperature range.

Prior to this disclosure, one of ordinary skill in the art would consider intentionally selecting a mix ratio that did not produce a peak LIM voltage at the onset of the devices life as sub-optimal and undesirable. However, as revealed by Figure 2, by selecting such an initial fill gas mixture ratio, as neon depletion occurs and the pressure of neon in the cavity drops, the LIM voltage will actually improve over time until it reaches the peak LIM voltage at 230. After reaching the peak LIM voltage at 230, the LIM voltage will then begin to slowly decrease over time as a function of the continued neon depletion, as would have occurred if the peak LIM voltage ratio 231 were initially selected for the fill gas mixture. In other words, if the selected fill gas mixture has a Helium to Neon ratio of 15:1 (shown generally at 235), it will have a Helium to Neon ratio richer in Neon than the peak LIM voltage ratio of 20:1 (shown at 231). The resulting usable life of the laser block assembly will be increased at least by the amount of time it will take for neon depletion to raise the LIM voltage from its starting level shown at 235 to the peak LIM voltage level shown at 230. For example for the Honeywell GG1308 sensor, the inventors have found that a fill gas mixture of 15:1 will result in approximately a 2-times life increase over a fill gas mixture of 20:1 for that device. Accordingly, the method proceeds in Figure 3 to 320 with selecting a fill gas mixture that has a Helium to Neon ratio richer in Neon than the peak LIM voltage ratio.

As would be appreciated by one of ordinary skill in the art after reading this specification, when a LIM voltage output from a readout assembly drops below a certain minimum LIM voltage threshold level, the LIM voltage output will be insufficient to drive the ring laser gyroscope circuitry receiving the output, resulting in RLG performance degradation and associated bit faults. Accordingly the mix ratio for the fill gas mixture selected at 320 should not (when the laser block assembly is expected to be in operation) result in a LIM voltage that will be below the minimum LIM voltage threshold level. In at least one alternative embodiment however, if it is known that some period of time will pass before the laser block assembly will need to be in an operational state, it may by initially manufactured with a Helium to Neon ratio sufficiently rich in Neon to result in an LIM voltage below the minimum LIM voltage threshold level. In such a case, it would be understood that sufficient neon depletion would need to occur prior to placing the laser block assembly into service to bring the LIM voltage within tolerance.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A ring laser gyroscope (100) device, the device comprising:
a laser block assembly (105) having a cavity (130) therein that defines a ring shaped laser beam path around the laser block assembly (105), the cavity (130) containing a fill gas mixture (132) comprising Helium and Neon, wherein the laser block assembly (105) is characterized as having a Neon depletion life limiter; and
a readout assembly (140) optically coupled to the laser block assembly (105), wherein the readout assembly (140) outputs a laser intensity monitor (LIM) voltage that represents optical energy within the cavity (130); and
wherein the fill gas mixture (132) has a Helium to Neon ratio richer in Neon than a ratio that would produce a peak LIM voltage from the readout assembly (140).

2. The device of claim 1, wherein the Helium to Neon ratio of the fill gas mixture (132) has at least 20% more Neon than a peak LIM voltage ratio that produces the peak LIM voltage.

3. The device of claim 1, wherein sensitivity of the LIM voltage to temperature in the ring laser gyroscope (100) increases over a first period of service life time as a function of neon depletion within the cavity (130).

4. The device of claim 1, wherein the sensitivity of the LIM voltage in the ring laser gyroscope (100) over an operating temperature range, increases over time until the neon pressure reaches a pressure equivalent to a peak LIM voltage ratio for the laser block assembly (105).

5. The device of claim 1, wherein the fill gas mixture (132) has a Helium to Neon ratio that produces an LIM voltage above a minimum LIM voltage threshold level for an electronic device coupled to the readout assembly (140).

6. The device of claim 1, wherein the fill gas mixture (132) has a Helium to Neon ratio that produces an LIM voltage output below a minimum LIM voltage threshold level for an electronic device coupled to the readout assembly (140).

7. A method for optimizing service life of a ring laser gyroscope (100), the method comprising:
determining (310) a peak laser intensity monitor (LIM) voltage ratio for a laser block assembly (105), wherein the laser block assembly (105) is **characterized in** having a neon depletion life limiter; and
selecting (320) a fill gas mixture (132) that has a Helium to Neon ratio richer in Neon than the peak LIM voltage ratio.

8. The method of claim 7, wherein determining a peak LIM voltage ratio further comprises:
performing a LIM voltage test of the laser block assembly (105) with fill gas mixtures (132) at a plurality of different Helium to Neon ratios;
wherein the plurality of the fill gas mixtures (132) at a plurality of different Helium to Neon ratios each have the same pressure of Helium; and
wherein the LIM voltage test is performed at equivalent temperature conditions for each of the plurality of different Helium to Neon ratios.

9. The method of claim 8, wherein performing a LIM voltage test of the laser block assembly (105) with fill gas mixtures (132) at a plurality of different Helium to Neon ratios further comprises:
generating LIM voltage versus mixture ratio data for each of the plurality of different Helium to Neon ratios;
generating neon pressure versus mixture ratio data for each of the plurality of difference Helium to Neon ratios; and
identifying the peak LIM voltage ratio associated with a peak LIM voltage based on the LIM voltage versus mixture ratio data.

10. The method of claim 7, wherein selecting a fill gas mixture (132) that has a Helium to Neon ratio richer in Neon than the peak LIM voltage ratio further comprises one of:
selecting a fill gas mixture (132) having a Helium to Neon ratio that produces an LIM voltage from a readout assembly (140) that is above a minimum LIM voltage threshold level for an electronic device coupled to the readout assembly (140).
